# EUROPEAN PATENT SPECIFICATION

(11) **EP 2 256 531 B1**
(45) Date of publication and mention of the grant of the patent: **22.08.2012**
(21) Application number: 10005317.2
(22) Date of filing: 21.05.2010
(51) Int. Cl.: G02B 6/44

(54) **Fiber optic harnesses and assemblies facilitating use of a pre-connectorized fiber optic cable(s) with a fiber optic terminal**
Glasfaserkabelbaum und -einheiten, die die Verwendung eines bzw. mehrerer vorverbundener Glasfaserkabel mit einem Glasfaseranschlusselement
Harnais à fibre optique et ensembles facilitant l'utilisant d'un ou plusieurs câbles à fibres optiques pré-connectés avec un terminal à fibre optique

(30) Priority: 29.05.2009 US 474866
(43) Date of publication of application: 01.12.2010
(73) Proprietor: Corning Cable Systems LLC, Hickory, NC 28601 (US)
(72) Inventor: Cox, Terry D., Keller Texas 76248 (US); Rodriguez, Diana, Fort Worth, Texas 76140 (US)
(74) Representative: Sturm, Christoph

(56) References cited:
- EP-A2- 0 409 390
- JP-A- 2001 116 968
- US-A- 6 151 437
- US-A1- 2003 031 419
- US-A1- 2006 029 334
- US-A1- 2006 263 029

## Description

### BACKGROUND

### Field of the Disclosure

The technology of the disclosure relates to fiber optic harnesses and assemblies for fiber optic terminals. The fiber optic terminals include, but are not limited to, local convergence points (LCPs), fiber distribution terminals (FDTs) and the like.

### Technical Background

To provide improved performance to subscribers, communication and data networks are increasingly employing optical fiber. The benefits of optical fiber are well known and include higher signal-to-noise ratios and increased bandwidth. To further improve performance, fiber optic networks are increasingly providing optical fiber connectivity all the way to end subscribers. These initiatives include various fiber-to-the-premises (FTTP), fiber-to-the-home (FTTH), and other fiber initiatives (generally described as FTTx).

In this regard, optical signals carried over fiber optic networks may be carried over fiber optic feeder cables to local convergence points (LCPs). The LCPs act as consolidation points for splicing, making cross-connections and interconnections, as well as providing locations for couplers and splitters. Fiber optic cables, such as distribution cables, exit the LCPs to carry optical signals between the fiber optic network and a subscriber's premises. Typical subscriber premises include single-dwelling units (SDUs), multi-dwelling units (MDUs), businesses, and/or other facilities or buildings. Fiber optic cables leaving the LCPs are typically run to one or more intermediate fiber distribution terminals (FDTs). FDTs facilitate FTTx applications by providing network access points to the fiber optic network to groupings of subscribers' premises. Optical interconnections to the subscribers' premises are typically provided via indoor/outdoor drop cables that are optically interconnected with the fiber optic cables within the FDTs. The FDTs also provide a consolidated location for technicians or other installation personnel to make and protect splices between the drop cables and the fiber optic cables as opposed to making splices in sporadic locations.

In either case of LCP and/or FDT fiber optic terminals, network-side fiber optic feeder cable stubs are fed into one or more openings in the fiber optic terminal enclosure during assembly., Optical fibers from the feeder cables are optically connected inside the fiber optic terminals during assembly and thus permanently attached during assembly. The feeder cable stubs are typically provided of customized lengths depending on the customer application. The fiber optic terminal with attached feeder cable stubs is then shipped to the customer. Providing fiber optic terminals with attached feeder cable stubs reduces flexibility. The fiber optic terminals must be shipped with the feeder cable stubs. The length of the feeder cable stubs are customized during assembly thereby increasing manufacturing complexity due to varying configurations for different applications and customers.

US 2003/031419 A1 discloses a fiber optic assembly, comprising: a support member comprising one or more openings disposed through a first end; at least one hardened connector disposed through the one or more openings of the support member; and a fiber optic harness optically connected to the at least one hardened connector on a first end and having at least one connector disposed on a second end. Other fiber optic assemblies according to the prior art are known from JP 2001 116968 A US 2006/029334 A1 and US 2006/0263029-A1.

### SUMMARY

Embodiments disclosed include fiber optic harnesses and fiber optic assemblies. The fiber optic harness and fiber optic assemblies can facilitate use of a pre-connectorized fiber optic cable(s) with a fiber optic terminal. This advantageously allows feeder cable stubs or cables that can be supplied separately from a fiber optic terminal. In one embodiment, the fiber optic terminal is provided and comprised of a support member. The support member includes one or more openings disposed through a first end of the support member. The support member may be configured to be separately attachable to a fiber optic terminal or alternatively may be integrated into a fiber optic terminal. At least one connector is disposed through the one or more openings of the support member. The connector(s) disposed through the openings of the support member may be a hardened connector(s) suitable for use in outdoor environments or may be a connector(s) suitable for indoor use. A fiber optic harness is provided and optically connected to the connector(s) on a first end of the fiber optic harness. The fiber optic harness has at least one connector disposed on a second end optically connected to the connector(s) provided in the support member.

Additional features and advantages will be set forth in the detailed description which follows, and in part will be readily apparent to those skilled in the art from that description or recognized by practicing the embodiments described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE FIGURES

**FIG. 1** is an exemplary fiber distribution terminal (FDT);

**FIG. 2** is the exemplary FDT of **FIG. 1** shown as being opened and without a skirt to show fiber optic connections made therein;

**FIG. 3** illustrates an exemplary fiber optic assembly configured to be used with a fiber optic terminal;

**FIG. 4** illustrates a perspective view of the fiber optic assembly of **FIG. 3** with the enclosure cover removed;

**FIG. 5** illustrates a perspective exploded view of the fiber optic assembly of **FIG. 3****;**

**FIGS. 6A and 6B** illustrate front perspective views of the fiber optic adapters disposed through the openings of the enclosure of the fiber optic assembly of **FIG. 3****;**

**FIG. 7** illustrates an end of an exemplary fiber optic feeder cable that can be connected to the fiber optic adapters of the fiber optic assembly of **FIG. 3****;**

**FIGS. 8A and 8B** illustrate a fully-connectorized fiber optic harness included in the fiber optic assembly of **FIG. 3****;**

**FIG. 9** illustrates the fiber optic assembly of **FIG. 3** installed on an exemplary fiber optic terminal;

**FIG. 10** illustrates the fiber optic terminal of **FIG. 8** with the fiber optic assembly installed and a skirt lowered to illustrate the fiber optic cables disposed through the openings of the fiber optic terminal and connected to the fiber optic adapters;

**FIG. 11** illustrates the fiber optic terminal of **FIG. 10** with the skirt installed and enclosing the fiber optic terminal;

**FIG. 12** illustrates a perspective view of an alternative fiber optic assembly configured for one fiber optic adapter and with the enclosure cover removed;

**FIG. 13** illustrates the fiber optic assembly of **FIG. 12** attached to a fiber optic terminal;

**FIG. 14** illustrates a fiber optic terminal with a support member for a fiber optic assembly disposed through in base of the fiber optic terminal; and

**FIG. 15** illustrates a fiber optic terminal with a fiber optic connector disposed through the support member in the fiber optic terminal of **FIG. 15****.**

### DETAILED DESCRIPTION

Reference will now be made in detail to embodiments, examples of which are illustrated in the accompanying drawings, in which some, but not all embodiments are shown. Indeed, the concepts may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

Embodiments disclosed in the detailed description include fiber optic harnesses and fiber optic assemblies. The fiber optic harness and fiber optic assemblies can facilitate use of a pre-connectorized fiber optic cable(s) with a fiber optic terminal. Feeder cable stubs or cables can be supplied separately from a fiber optic terminal. In one embodiment, the fiber optic terminal is provided and comprised of a support member. The support member comprising one or more openings disposed through a first end of the support member. The support member may be configured to be separately attachable to a fiber optic terminal or may be integrated into a fiber optic terminal. At least one connector is disposed through the one or more openings of the support member. The connector(s) disposed through the openings of the support member may be a hardened connector(s) suitable for use in outdoor environments or may be a connector(s) suitable for indoor use. A fiber optic harness is provided and optically connected to the connector(s) on a first end of the fiber optic harness. The fiber optic harness has at least one connector disposed on a second end optically connected to the connector(s) provided in the support member.

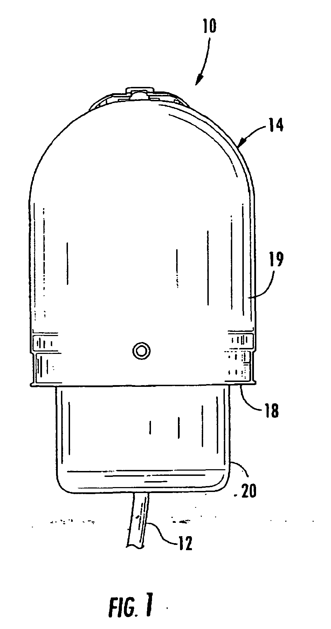

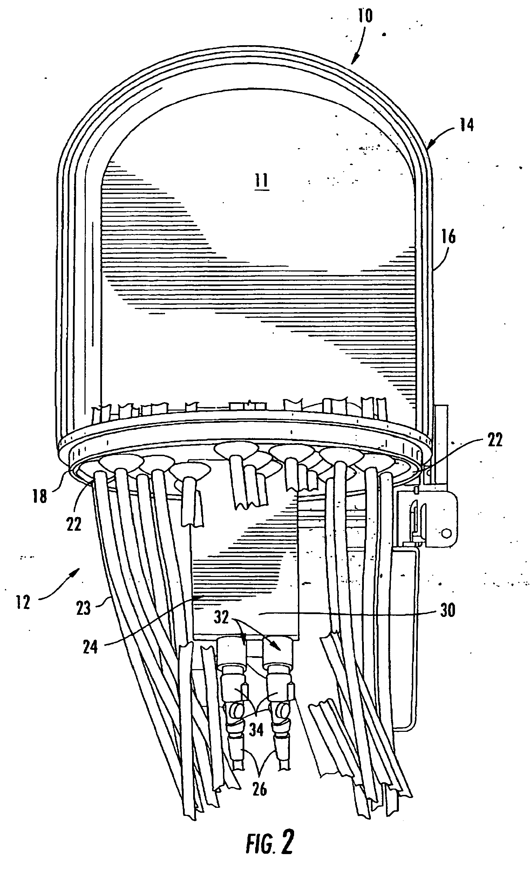

**FIG. 1** illustrates an exemplary fiber optic terminal **10** that may employ fiber optic harnesses and fiber optic assemblies according to embodiments disclosed herein. The fiber optic terminal **10** provides a convenient access point in a telecommunications or data network for a field technician to install and reconfigure optical fiber connections between network-side and subscriber-side fiber optic cables. The fiber optic terminal **10** in **FIG. 1** is the ClearCurve™ fiber distribution terminal (FDT) manufactured by Corning Cable Systems, LLC of Hickory, North Carolina, the assignee of the present application. However, the fiber optic terminal **10** but could be of any manufacturer or type, including but not limited to a local convergence point (LCP). One or more fiber optic cables **12** can be run or inserted inside the fiber optic terminal **10** to establish fiber optic connections inside an internal chamber 11 **(****FIG. 2****)** in the fiber optic terminal **10.** Only one fiber optic cable **12** is illustrated in **FIG. 1** as being run inside the fiber optic terminal **10.** However, a plurality of fiber optic cables **12** may be run inside the fiber optic terminal **10.** The fiber optic cables **12** can include both network-side and subscriber-side cables. The cables may be feeder or drop cables. By the term "subscriber-side," it is meant that optical fiber, fiber optic cable, or optical connection, as the case may be, is provided anywhere between the end subscriber and the fiber optic terminal **10.** By the term "network-side," it is meant that the optical fiber, fiber optic cable, or optical connection, as the case may be, is provided between a fiber optic network, central switching point, central office, or the like and the fiber optic terminal **10.**

As illustrated in **FIGS. 1** **and** **2****,** the fiber optic terminal **10** includes an enclosure **14** formed by an open shell **16 (****FIG. 2****)** having a base **18.** A cover **19** can be affixed to the enclosure **14** to close off the open shell **16** and protect fiber optic components and connections established inside the enclosure **14.** The shell **16** and cover **19** may be made of any suitable rigid material, such as aluminum, plastic, or thermoplastic. A skirt **20** may also be provided and attached to the enclosure **14** at the base **18** to group and protect fiber optic cables **12** running inside the enclosure **14** and to protect openings **22** in the base **18** in communication with the internal chamber **11** of the enclosure **14.**

Drop cables **23** and feeder cables **26** can be connected to the fiber optic terminal **10** wherein connections (not shown) between optical fibers in the drop and feeder cables **23, 26** are optically connected inside the enclosure **14** of the fiber optic terminal **10.** The drop cables **23** in this embodiment are not pre-connectorized. Instead,
the cable jacket of the drop cables **23** are stripped and run inside the enclosure **14** during installation. The optical fibers of the drop cables **23** are terminated and then connected to fiber optic adapters (not shown) within the terminal to establish connections with the optical fibers of the feeder cables **26.**

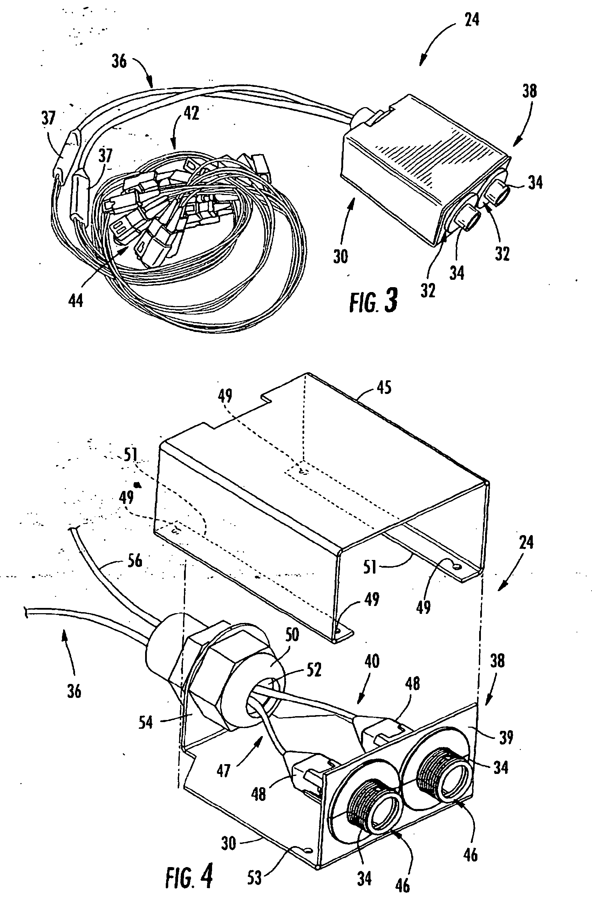

A fiber optic assembly **24** is provided as illustrated in **FIG. 2** so that pre-connectorized feeder cables **26** (also referred to as "feeder cables **26")** can be connected to the fiber optic terminal **10** without having to make splices with optical fibers in the feeder cables **26.** The fiber optic assembly **24** is attached to the base **18** of the fiber optic terminal **10** in this embodiment. Connections are made during assembly between the fiber optic assembly **24** and optical fibers of the drop cables **23** so that a pre-connectorized connection established with the fiber optic assembly **24** establishes a connection to the drop cables **23.** As will be discussed in more detail below, the fiber optic assembly **24** includes a support member **30** comprising one or more openings **32** that support one or more hardened connectors **34** disposed externally from the support member **32** for access during installation. A support member, is any device or configuration that supports one or more connectors to facilitate pre-connectorized connection between a fiber optic cable and the fiber optic terminal. The support member **30** illustrated in **FIG. 2** is separate device constructed from a suitable material such as aluminum that is attached to the fiber optic terminal **10.** A fiber optic harness **36 (****FIG. 3****)** is optically connected to the hardened connectors **34** so that the pre-connectorized feeder cables **26** as illustrated in **FIG. 2** can be connected to the fiber optic terminal **10** without requiring splicing. The support member **30** can be constructed out of a metal or other non-metal material, including but not limited to a polymer. Hardened connectors **34** are illustrated, but non-hardened connectors may be employed as well.

**FIGS. 3-5** illustrate other views and detail on the components of the fiber optic assembly **24** in **FIG. 2****.** As illustrated in **FIG. 3****,** the fiber optic assembly **24** is shown. The fiber optic assembly **24** includes the support member **30.** The support member **30** in this embodiment is a separate device configured to be separately attached to the fiber optic terminal **10** as illustrated in **FIG. 2****.** However, the support member may be configured to be provided internally or as a part of the fiber optic terminal **10** and/or its enclosure **14** as will be described in alternative embodiments below. The support member **30** in this embodiment comprises two openings **32** disposed through a first end **38** of the support member **30.** Of course, the support member may have any desired number of openings **32.** Two hardened connectors **34** are disposed through the openings **32** of the support member **30** to allow pre-connectorized feeder cables **26** to be connected for establishing optical connectivity with the fiber optic harness **36** of the fiber optic assembly **24.** As illustrated in **FIG. 4**, the fiber optic harness **36** is optically connected to the hardened connectors **34** on a first end **40** of the fiber optic harness **36.** The fiber optic harness **36** has connectors **42 (****FIG. 3****)** disposed on a second end **44** of the fiber optic harness **36.** The connectors **42** on the second end **44** of the fiber optic harness **36** can be connected inside the enclosure **14** of the fiber optic terminal **10** to establish fiber optic connections with drop cables **23.** In this manner, when the pre-connectorized feeder cables **26 (****FIG. 2****)** are connected to the hardened connectors **34,** the optical fibers in the pre-connectorized feeder cables **26** are connected to optical fibers in the fiber optic harness **36** and thus to the connectors **42.**

In this embodiment the fiber optic harness **36** consists of two twelve (12) fiber optic cables **56** for a total of twenty-four (24) fibers. However, any number of fiber optic cables **56** or fiber count may be provided. Fanout assemblies **37** are provided on the fiber optic cables **56** of the fiber optic harness **36** to break out the individual optical fibers from the fiber optic cables **56** to the connectors **42.** Instead of having the fanout assembly, in other embodiments the fiber optic harness **36** may include one or more splitters **37** such as a 1x4, 1x8, 1x16, or 1xN splitter for providing multiple channels from a single fiber. The splitter **37** may be disposed along any suitable portion of the fiber optic harness **36** and may be located within the terminal **10,** on the support member **30,** or other suitable location. The fiber optic cables **56** may be of any fiber count and size, including but not limited to 900 micrometers (µm), and may or may including coating on the optical fibers contained therein. Also in this embodiment, the connectors **42** are simplex SC connectors, but may be a multi-fiber connector or connectors and any other type of connector or connectors, including but not limited to FC, LC, ST, MTP, and MPO connector types, etc. Further, the connectors **42** could be duplex connectors or other multi-fiber connectors.

**FIG. 4** is a perspective view of the fiber optic assembly **24** with a cover **45** removed from the support member **30** to show the internal components of the fiber optic assembly **24** and the fiber optic harness **36** disposed therethrough and connected to the hardened connectors **34.** The hardened connectors **34** are disposed through the openings **32** disposed in a first flange **39** of the support member **30.** In this embodiment the hardened connectors **34** are provided as part of fiber optic adapters **46.** However, the hardened connectors **34** may consist of other connector types, including but not limited to fiber optic plugs, fiber optic receptacle, or any combination thereof. In this embodiment, the fiber optic harness **36** can be detached from the fiber optic adapters **46** and thus the hardened connectors **34.** The fiber optic adapters **46** contain connection points on each side of the fiber optic adapter **46.** The fiber optic adapters **46** in the fiber optic assembly **24** are MTP-to-Optitip™ adapters, wherein the hardened connector **34** is provided as an Optitip adapter on one side of the fiber optic adapter **46** and a MTP adapter is provided on the opposite side of the fiber optic adapted **46**. The Optitip connectors are manufactured by Corning Cable Systems, LLC, and described in more detail in U.S. Patent No. 7,264,402. However, note that any other suitable type of fiber optic adapter may be employed. For example, the fiber optic adapters **46** could be MTP-to-MTP fiber optic adapters if the fiber optic terminal **10** were employed indoors such that a hardened connector is not required. Additionally, other embodiments could have a receptacle to plug arrangement that does not require an adapter, but instead the receptacle or the plug is attached to the support member and is the hardened connector.

Detachable MTP connectors **48** are disposed on the first end **40** of the fiber optic harness **36** and are connected to the MTP-side of the fiber optic adapters **46** inside the support member **30.** A plurality of end portions **47** of the first end **46** of the fiber optic harness **36** includes a plurality of optical fibers inserted through a conduit **50.** The conduit **50** facilitates inserting the end portions **47** of the fiber optic harness **36** through a Second opening **52** in a second flange **54** of the support member **30.** The individual fiber optic cables **56** of the fiber optic harness **36** can be routed inside the fiber optic assembly **24** to establish fiber optic connections to feeder cables **26** connected to the hardened connectors **34.** Once the fiber optic assembly **24** is assembled with a portion of the fiber optic harness **36** disposed through the second opening **52** and connected to the hardened connectors **34** (i.e., the fiber optic adapter **46** in this embodiment), the cover **45** can be placed on top of the support member **30** as illustrated in **FIG. 3****.** The cover **45** secures and protects the first end **40** of the fiber optic harness **24** and the MTP-side of the fiber optic adapters **46.**

In this embodiment, the cover **45** includes one or more orifices **49** disposed on lip sections **51** that are configured to align with orifices **53** disposed in the support member **30.** Fasteners (not shown) can be used to secure the cover **45** to the support member **30,** or other means can be employed including but not limited to snap connections and/or an adhesive. The fasteners may be loose or captive.

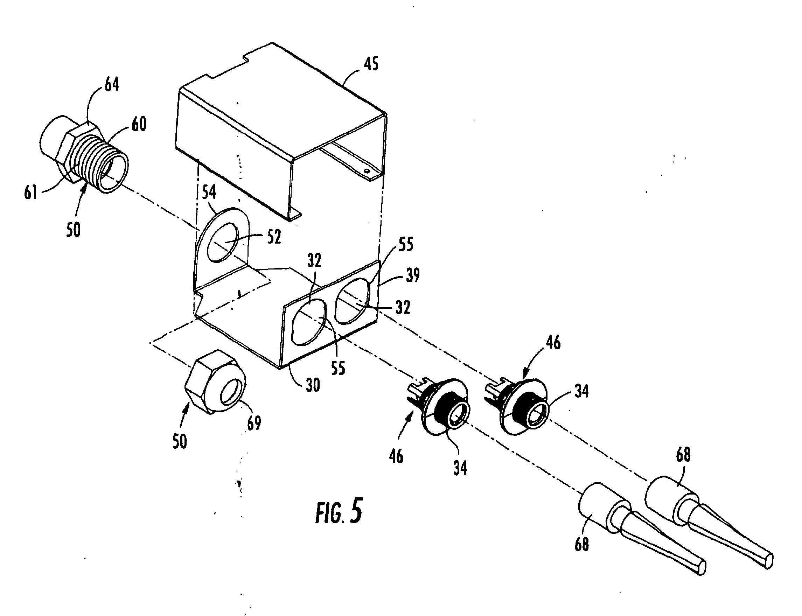

**FIG. 5** illustrates a perspective exploded view of the fiber optic assembly **24** of **FIG. 3** to illustrate the individual components of the fiber optic assembly **24.** As illustrated therein, the fiber optic adapters **46** are configured to be inserted into the openings **32** disposed in the first flange **39** of the support member **30.** The geometry of the inner diameter of the openings **32** may be shaped according to the geometry of an outer diameter of the fiber optic adapters **46** to provide for a secure fit of the fiber optic adapters **46** disposed through the openings **32.** The fiber openings **32** could also be keyed **55** to receive a keyed structure disposed in the fiber optic adapters **46** if desired. The conduit **50** that is disposed through the second opening **52** of the support member **30** is comprised of a cylindrical member **60** having external threads **61** disposed through the second opening **52.** To secure the member **60** in the second opening **52,** the member **60** is inserted into the second opening **52** until a shoulder **64** reaches the second flange **54.** An internally threaded nut **69** is screwed onto the external threads **61** of the member **60** to provide a compression fit of the shoulder **64** and the nut **69** on each side of the second flange **54** adjacent the second opening **52.** Connectors **68,** which may be disposed on the feeder cables **26 (****FIG. 1****)**, can be connected to the hardened connectors 34 as illustrated in **FIG. 5**.

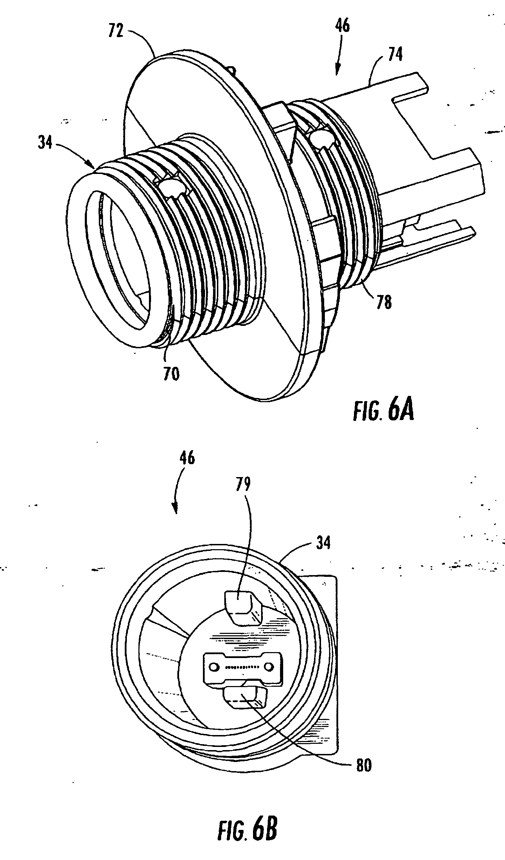

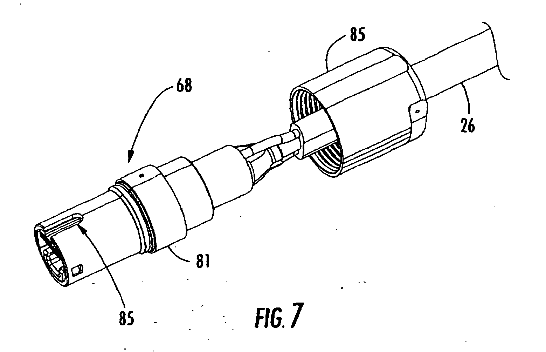

**FIGS. 6A and 6B** illustrate front perspective views of the fiber optic adapters **46** disposed through the openings **32** of the support member **30** of the fiber optic assembly **24** of **FIG. 3****.** As illustrated therein, the hardened connector **34** contains external threads **70** for engaging with internal threads of the connectors **68 (****FIG. 5****)** attached to the hardened connectors **34.** A flange or shoulder **72** having an outer diameter greater than the inner diameter of the openings **32** is disposed in the fiber optic adapter **46** between the hardened connectors **34** and an MTP-side receptacle **74.** In this manner, the hardened connectors **34** remain external to the support member 30 and cover **45** when disposed through the openings **32.** The MTP-side receptacle **74** may also have external threads **78** to engage with internal threads inside the openings **32** (not shown) to secure the fiber optic adapter **46** inside the openings **32** of the fiber optic assembly **24.** Alternatively, a locking nut, locking tab, or the like may be used for securing the fiber optic adapter **46** to the support member. **FIG. 6B** illustrates another view of the fiber optic adapter **46** wherein the internal components of the hardened connector **34** are illustrated (i.e., the ferrule of the connector is attached and visible). The hardened connector **34** may only receive a plug of like ferrule configuration. The hardened connector **34** defines a first key **79** that is received within a key slot **85** of a plug (see **FIG. 7****).** As shown, the first key **79** is a protruding feature that is molded into the hardened conneetor **34.** The hardened connector **34** further defines a second protruding feature **80** to prevent a dissimilar plug from being inserted into the hardened connector **34**.

**FIG. 7** illustrates an end of an exemplary feeder cable **26** that may be connected to the hardened connectors **34** of the fiber optic assembly **24** of **FIG. 3****.** As illustrated, connector **68** is a plug **81** such as the Optitip™ plug depicted. A threaded coupling nut **85** on the plug **81** is operable for securing the plug **81** to the hardened connector **34** upon engagement. The plug **81** contains a key slot **85** that is aligned with the first key **79** of the hardened connector **34** as illustrated in **FIG. 6****B.**

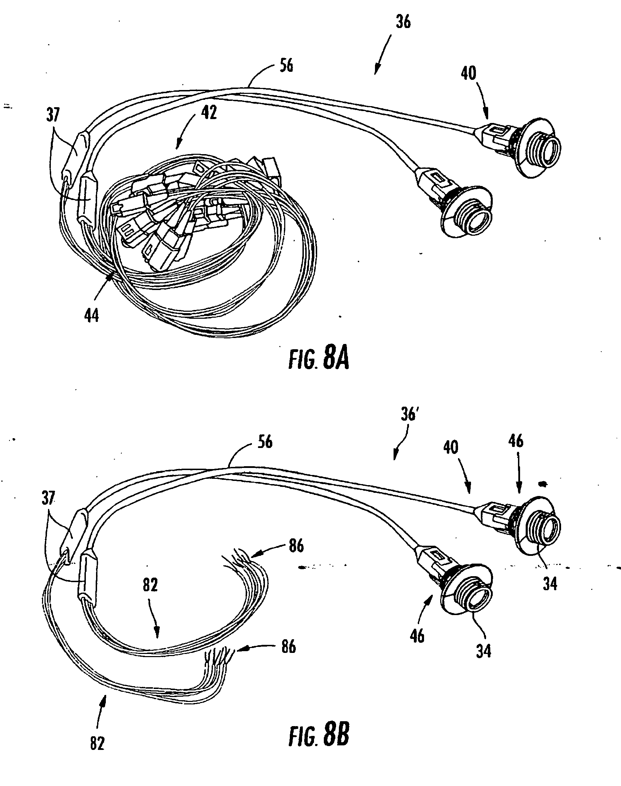

**FIGS. 8A and 8B** illustrate variations of the fiber optic harness **36** that can be employed in the fiber optic assembly **24** of **FIG. 3****.** The fiber optic harness **36** in **FIG. 8A** is the fiber optic harness **36** employed in the fiber optic assembly **24** as illustrated in FIG. 3 and thus will not be discussed further. **FIG. 8B** illustrates an alternative fiber optic harness **36'** that can be employed in the fiber optic assembly **24** of FIG. 3. In the fiber optic harness **36'** of FIG. **8B**, instead of the connectors being disposed on the second end **44** of the fiber optic harness **36',** the optical fibers **86** of the cable harnesss **36'** are not connectorized. The fiber optic cables **56** are provided with pigtails **82** so that the optical fibers **86** can be connected via single fiber or multi-fiber splices inside the fiber optic terminals **10.**

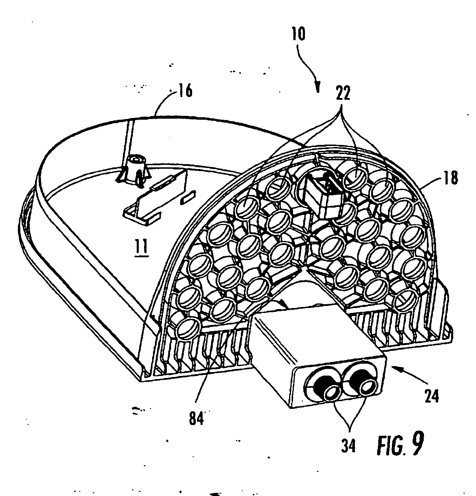

**FIG. 9** illustrates the fiber optic assembly **24** of **FIG. 3** installed on the fiber optic terminal **10.** As illustrated, the fiber optic assembly **24** is installed on the base **18** of the fiber optic terminal **10.** The fiber optic assembly **24** is fit into a feeder cable opening **84** in the base **18** where feeder cables **26** would normally be disposed if the fiber optic assembly **24** were not employed. The fiber optic assembly **24** is compression fit to the base **18** via the conduit **50** previously discussed and illustrated in **FIG. 5**. The cables **56** of the fiber optic harness **36** (not shown) are disposed inside the internal chamber **11** of the fiber optic terminal **10** to establish connections. Thus, the feeder cables **26** can be connected to the hardened connectors **34** when the fiber optic terminal **10** is installed so that connections are established with pre-connectorized feeder cables **26.**

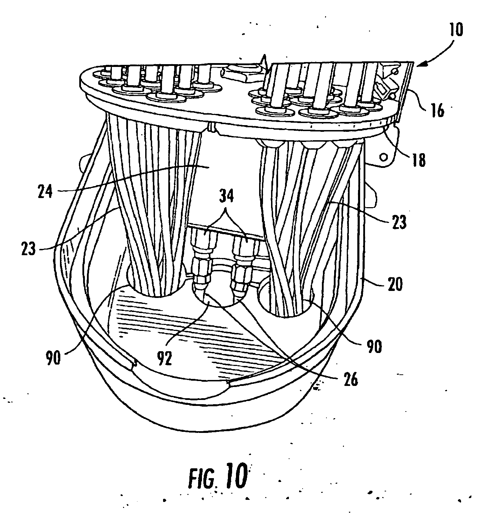

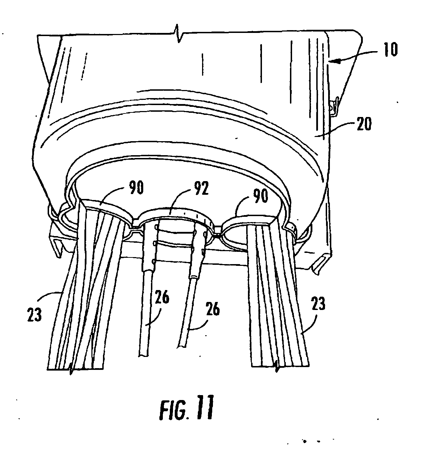

After the fiber optic assembly **24** is connected to the fiber optic terminal **10**, the skirt **20** can be raised up as illustrated in **FIG. 10** to prepare for securing to the fiber optic terminal **10** as illustrated in **FIG. 11****.** The skirt **20** may comprised one or more openings **90, 92** for allowing drop and feeder cables **23, 36** to extend therethrough and from the fiber optic terminal **10.**

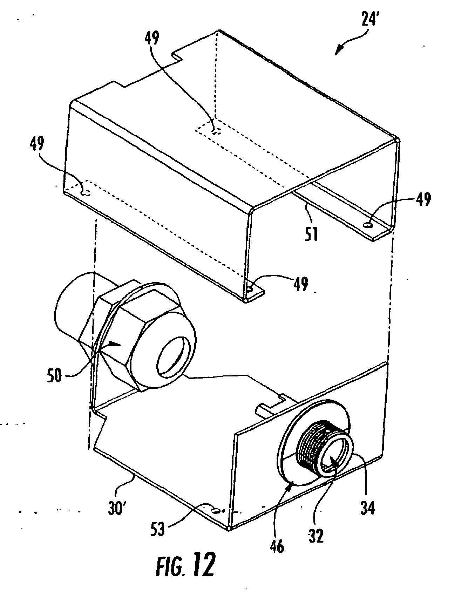

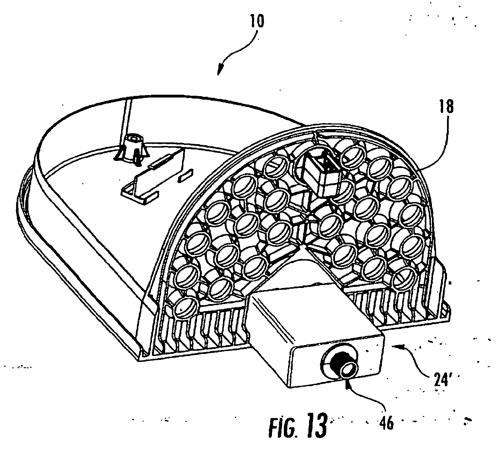

**FIGS. 12** **and** **13** illustrate another embodiment of a fiber optic assembly **24'.** The fiber optic assembly **24**' contains essentially the same components as provided in the fiber optic assembly **24** of **FIG. 3****.** However, in the fiber optic assembly **24'** of **FIG. 12****,** only one opening **32** is disposed in the support member **30'** to support one feeder cable. As a result, only one fiber optic adapter **46** is provided in the fiber optic assembly **24'.** The fiber optic adapter **46** is a MTP-to-Optitip adapter with a hardened connector **34** in this embodiment, but any type of adapter arrangement is possible, including but hardened and non-hardened or indoor connectors. The fiber optic assembly **24'** of **FIG. 12** is shown in **FIG. 13** as being installed on the base of the fiber optic terminal **10** similar to the fiber optic assembly **24** of **FIG. 9****.**

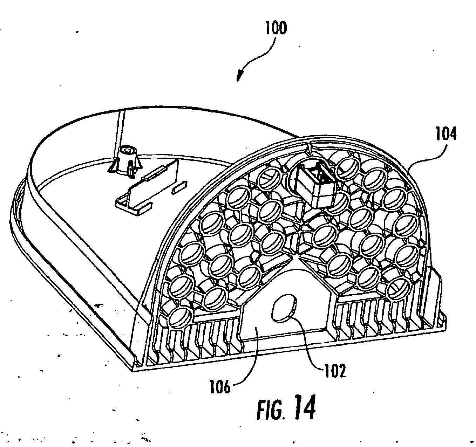

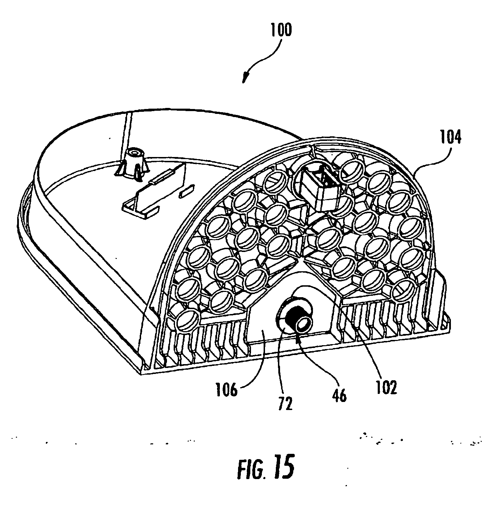

**FIGS. 14** **and** **15** illustrate another embodiment of a fiber optic assembly wherein the support member is integrated into a fiber optic terminal **100.** In this embodiment as illustrated in **FIG. 14****,** an opening **102** provided as part of the base **104** of the fiber optic terminal **10** and configured to receive the fiber optic adapter **46.** A fiber optic adapter just like the fiber optic adapter **46** in **FIGS. 6A and 6B** can be disposed in the opening **102** just as provided for the fiber optic assemblies **24, 24'** discussed above. More than opening **102** could be provided. **FIG. 15** illustrates the fiber optic adapter **46** disposed through the opening **102** and ready to receive a pre-connectorized feeder cable. The base **104** contains a support surface **106** that contains the opening **102** to provide for a pre-connectorized connection to a pre-connectorized feeder cable. The flange **72** of the fiber optic adapter **46** abuts the support surface 106 when the fiber optic adapter **46** is disposed through the opening **102.** In this manner, a separately attachable support member is not required. The opening **102** can be of the same geometry as the openings **32** in the support member **30** of the fiber optic assemblies **24, 24**' discussed above. In this manner, a pre-connettorized feeder cable can be connected to the fiber optic adapter to establish a fiber optic connection with optical fibers disposed inside the fiber optic terminal **100.**

Many modifications and other embodiments set forth herein will come to mind to one skilled in the art to which the embodiments disclosed herein pertain having the benefit of the teachings presented in the foregoing descriptions and the associated drawings. These modifications include, but are not limited to a fiber optic assembly support member as either a separate or integrated device to a fiber optic terminal, type of connectors, which may be hardened or not hardened and/or outdoor and indoor, connector type, including but not limited to SC, FC, LC, ST, MTP, and MPO, etc. Any fiber count of the fiber optic harness may be provided. The fiber optic harness may be detachable or not from the fiber optic connector disposed through the openings of the fiber optic assembly. The fiber optic assemblies and harnesses may be employed with any type of fiber optic terminal.

Further, as used herein, it is intended that terms "fiber optic cables" and/or "optical fibers" include all types of single mode and multi-mode light waveguides, including one or more bare optical fibers, loose-tube optical fibers, tight-buffered optical fibers, ribbonized optical fibers, bend-insensitive optical fibers, or any other expedient of a medium for transmitting light signals. Therefore, it is to be understood that the disclosure is not to be limited to the specific embodiments disclosed and that modifications and other embodiments are intended to be included within the scope of the appended claims. It is intended that the disclosure cover the modifications and variations of the embodiments provided they come within the scope of the appended claims. Although specific terms are employed herein, they are used in a generic and descriptive sense only and not for purposes of limitation.

## Claims

1. A fiber optic assembly, comprising:
a support member (30) comprising one or more openings (32) disposed through a first end (38); whereby the support member (30) comprises a base comprising said at least one openings (32) disposed through a first flange (39) on said first end (38) and a second opening (52) disposed through a second flange (54) on a second end opposite the first end (38); and whereby the support member (30) comprises a cover (45) attached to the base to form an enclosure; wherein the support member (30) is configured to be separately attached to a fiber optic terminal;
at least one hardened connector (34) disposed through the one or more openings (32) of the support member (30), whereby said hardened connector (34) is placed on the first flange (39) of the support member (30);
a fiber optic harness (36) optically connected to the at least one hardened connector (34) disposed on a first end (40) of the fiber optic harness (36) and having at least one connector (42) disposed on a second end (44), whereby a conduit (50) is disposed through the second opening (52) of the support member (30) and receives the fiber optic harness (36).

2. The fiber optic assembly of claim 1, wherein the support member (30) is integrated in an enclosure of a fiber optic terminal.

3. The fiber optic assembly of claim 1 or 2, wherein the at least one hardened connector (34) is comprised from the group consisting of at least one fiber optic adapter, at least one fiber optic plug, and at least one fiber optic receptacle.

4. The fiber optic assembly of claim 1, wherein the second end (44) of the fiber optic harness (36) is inserted through a second opening of the support member (30).

5. The fiber optic assembly of claim 1, wherein a plurality of end portions of the second end of the fiber optic harness (36) includes a plurality of optical fibers inserted through the second opening of the support member (30).

6. The fiber optic assembly of claim 4, further comprising a fanout assembly (37) disposed in the plurality of optical fibers between the first end and the second end of the fiber optic harness (36).

7. The fiber optic assembly of claims 1-6, wherein the one or more openings are keyed to support the at least one hardened connector (34).

8. The fiber optic assembly of claims 1-7, wherein the fiber optic harness further includes at least one splitter.

## Patentansprüche

1. Glasfaseranordnung, die Folgendes umfasst:
ein Stützglied (30), umfassend eine oder mehrere Öffnungen (32), durch ein erstes Ende (38) angeordnet; wobei das Stützglied (30) eine Basis umfasst, die die mindestens eine Öffnung (32), angeordnet durch einen ersten Flansch (39) an dem ersten Ende (38), und eine zweite Öffnung (52), angeordnet durch einen zweiten Flansch (54) an einem zweiten Ende gegenüber dem ersten Ende (38), umfasst, und wobei das Stützglied (30) eine Abdeckung (45) umfasst, die an der Basis angebracht ist, um eine Umhüllung auszubilden; wobei das Stützglied (30) konfiguriert ist, separat an einem Glasfaseranschlusselement angebracht zu werden;
mindestens einen gehärteten Verbinder (34), durch die eine oder mehreren Öffnungen (32) des Stützglieds (30) angeordnet, wobei der gehärtete Verbinder (34) auf dem ersten Flansch (39) des Stützglieds (30) platziert ist;
einen Glasfaserkabelbaum (36), der optisch mit dem mindestens einen, an einem ersten Ende (40) des Glasfaserkabelbaums (36) angeordneten gehärteten Verbinder (34) verbunden ist und mindestens einen an einem zweiten Ende (44) angeordneten Verbinder (42) aufweist, wobei ein Kanal (50) durch die zweite Öffnung (52) des Stützglieds (30) angeordnet ist und den Glasfaserkabelbaum (36) aufnimmt.

2. Glasfaseranordnung nach Anspruch 1, wobei das Stützglied (30) in eine Umhüllung eines Glasfaseranschlusselements integriert ist.

3. Glasfaseranordnung nach Anspruch 1 oder 2, wobei der mindestens eine gehärtete Verbinder (34) aus der Gruppe bestehend aus mindestens einem Glasfaseradapter, mindestens einem Glasfaserstecker und mindestens einer Glasfaserbuchse besteht.

4. Glasfaseranordnung nach Anspruch 1, wobei das zweite Ende (44) des Glasfaserkabelbaums (36) durch eine zweite Öffnung des Stützglieds (30) eingeführt ist.

5. Glasfaseranordnung nach Anspruch 1, wobei mehrere Endabschnitte des zweiten Endes des Glasfaserkabelbaums (36) mehrere durch die zweite Öffnung des Stützglieds (30) eingeführte Glasfasern beinhalten.

6. Glasfaseranordnung nach Anspruch 4, weiterhin umfassend eine Auffächerungsanordnung (37), die in den mehreren Glasfasern zwischen dem ersten Ende und dem zweiten Ende des Glasfaserkabelbaums (36) angeordnet ist.

7. Glasfaseranordnung nach den Ansprüchen 1-6, wobei die eine oder mehreren Öffnungen verzahnt sind, um den mindestens einen gehärteten Verbinder (34) zu stützen.

8. Glasfaseranordnung nach den Ansprüchen 1-7, wobei der Glasfaserkabelbaum weiterhin mindestens einen Verteiler beinhaltet.

## Revendications

1. Ensemble à fibres optiques comprenant :
un élément support (30) comprenant une ou plusieurs ouvertures (32) disposées à travers une première extrémité (38) ; où l'élément support (30) comprend une base comprenant ladite au moins une ouverture (32) disposée à travers une première bride (39) sur ladite première extrémité (38) et une deuxième ouverture (52) disposée à travers une seconde bride (54) sur une seconde extrémité opposée à la première extrémité (38) ; et où l'élément support (30) comprend un couvercle (45) fixé à la base pour former une enceinte ; où l'élément support (30) est configuré pour être fixé de manière séparée à un terminal à fibres optiques ;
au moins un connecteur durci (34) disposé à travers la ou les ouvertures (32) de l'élément support (30), où ledit connecteur durci (34) est placé sur la première bride (39) de l'élément support (30) ;
un faisceau de fibres optiques (36) connecté optiquement à l'au moins un connecteur durci (34) disposé sur une première extrémité (40) du faisceau de fibres optiques (36) et ayant au moins un connecteur (42) disposé sur une seconde extrémité (44), où un conduit (50) est disposé à travers la deuxième ouverture (52) de l'élément support (30) et reçoit le faisceau de fibres optiques (36).

2. Ensemble à fibres optiques selon la revendication 1, dans lequel l'élément support (30) est intégré dans une enceinte d'un terminal à fibres optiques.

3. Ensemble à fibres optiques selon la revendication 1 ou la revendication 2, dans lequel l'au moins un connecteur durci (34) est compris dans le groupe consistant en au moins un adaptateur de fibre optique, au moins une fiche de fibre optique et au moins un logement de fibre optique.

4. Ensemble à fibres optiques selon la revendication 1, dans lequel la seconde extrémité (44) du faisceau de fibres optiques (36) est insérée à travers une deuxième ouverture de l'élément support (30).

5. Ensemble à fibres optiques selon la revendication 1, dans lequel une pluralité de parties d'extrémité de la seconde extrémité du faisceau de fibres optiques (36) comprend une pluralité de fibres optiques insérées à travers la deuxième ouverture de l'élément support (30).

6. Ensemble à fibres optiques selon la revendication 4, comprenant en outre un ensemble en éventail (37) disposé dans la pluralité de fibres optiques entre la première extrémité et la seconde extrémité du faisceau de fibres optiques (36).

7. Ensemble à fibres optiques selon les revendications 1 à 6, dans lequel la ou les ouvertures sont conçues pour accueillir l'au moins un connecteur durci (34).

8. Ensemble à fibres optiques selon les revendications 1 à 7, dans lequel le faisceau de fibres optiques comprend en outre au moins un séparateur.
